# EUROPEAN PATENT APPLICATION

(11) **EP 4 570 752 A1**
(43) Date of publication of application: **18.06.2025**
(21) Application number: 24744880.6
(22) Date of filing: 17.01.2024
(51) Int. Cl.: C01B 32/174

(54) **CARBON NANOTUBE DISPERSION AND PREPARATION METHOD THEREFOR**

(30) Priority: 19.01.2023 KR 20230007983
(71) Applicant: LG CHEM, LTD., Seoul 07336 (KR)
(72) Inventor: KIM, Eun Bum, Daejeon 34122 (KR); JANG, Young Jin, Daejeon 34122 (KR); YOON, Ki Youl, Daejeon 34122 (KR)
(74) Representative: Hoffmann Eitle
(86) International application number: PCT/KR2024/000853
(87) International publication number: WO 2024/155100

(57) **Abstract**

The present invention relates to a carbon nanotube dispersion and a preparation method therefor, the dispersion having a co-dispersant, comprising polyethyleneglycol, polystyrene and cellulose-based components, that is applied thereto. The carbon nanotube dispersion of the present invention has excellent viscosity stability during room-temperature and high-temperature storage.

## Description

### TECHNICAL FIELD

### Cross-reference to Related Applications

This application claims the benefit of Korean Patent Application No. 10-2023-0007983, filed on January 19, 2023, in the Korean Intellectual Property Office, the disclosure of which is incorporated herein in its entirety by reference.

### Technical Field

The present invention relates to a carbon nanotube dispersion and a method for preparing the same, wherein the carbon nanotube dispersion has excellent storage stability due to a small change in viscosity over time during room-temperature and high-temperature storage, and is particularly suitable for use as a conductive material due excellent conductivity.

### BACKGROUND ART

A carbon nanotube is a macromolecule in which a hexagonal honeycomb-shaped graphite surface, in which one carbon atom is bonded to three other carbon atoms, is rolled into a nano-sized diameter. A carbon nanotube is hollow, and thus, is lightweight, and has electrical conductivity as good as that of copper, thermal conductivity as excellent as that of diamond, and tensile strength as good as that of steel. According to the rolled-shape thereof, a carbon nanotube may be divided into a single-walled carbon nanotube (SWCNT), a multi-walled carbon nanotube (MWCNT), and a rope carbon nanotube.

Carbon nanotubes have recently been widely used as a conductive material for a secondary battery due to the excellent electrical conductivity, but carbon-based conductive materials such as carbon nanotubes have a problem in which the conductive materials are not uniformly dispersed in an electrode slurry composition and are easily aggregated. If the conductive material is aggregated in the electrode slurry composition, the conductive material is not evenly distributed within an active material layer during a process of forming an electrode, which also leads to degradation in performance of a secondary battery. Therefore, studies on various techniques are being conducted to ensure that a conductive material is evenly dispersed in an electrode slurry composition.

Representatively, an attempt to increase dispersibility by introducing a dispersant together with a conductive material is the most common. Specifically, a method for improving dispersibility in a dispersion state by introducing a polymer component such as polyvinyl pyrrolidone (PVP) or hydrogenated nitrile butadiene rubber (HNBR) as a dispersant is known. However, when the above-described components are applied as a dispersant, there is another problem in that the viscosity of the dispersion itself sharply increases when the content of a conductive material increases, thereby reducing the processability of the dispersion itself, and accordingly, when the above-described components are applied as a single dispersant, the content of a conductive material cannot be significantly increased, which leads to a disadvantage in that the improvement in electrical conductivity is limited. In addition, even when the above-described components are applied as a single dispersant, so that the initial viscosity of the dispersion is low, the viscosity of the dispersion changes significantly over time, which causes a problem in that the quality of the dispersion deteriorates during the distribution process thereof.

Therefore, there is a need for the development of a novel carbon nanotube dispersion capable of maintaining the content of a conductive material at a predetermined level or higher while also maintaining viscosity and viscosity stability at an excellent level.

### Prior Art Document

(Patent Document 1) KR 10-2125963 B1

### DISCLOSURE OF THE INVENTION

### TECHNICAL PROBLEM

The purpose of the present invention is to provide a carbon nanotube dispersion which is capable of maintaining the content of carbon nanotubes in the dispersion at a predetermined level or higher while having a satisfactory initial viscosity of the dispersion itself, and which has excellent storage stability due to a lower rate of change in viscosity over time.

### TECHNICAL SOLUTION

In order to achieve the above-described purpose, the present invention provides a carbon nanotube dispersion and a method for preparing the same.

Specifically, (1) the present invention provides a carbon nanotube dispersion including carbon nanotubes, a solvent, a main dispersant, and an auxiliary dispersant, wherein the auxiliary dispersant contains polyethylene glycol, polystyrene, and a cellulose-based component.

(2) In (1) above, the present invention provides a carbon nanotube dispersion, wherein the cellulose-based component is one or more selected from the group consisting of methyl cellulose, (hydroxypropyl)methyl cellulose, ethyl cellulose, and hydroxypropyl cellulose.

(3) In (1) or (2) above, the present invention provides a carbon nanotube dispersion, wherein the polyethylene glycol is included in an amount of 10 parts by weight to 30 parts by weight based on a total of 100 parts by weight of the auxiliary dispersant.

(4) In any one among (1) to (3) above, the present invention provides a carbon nanotube dispersion, wherein the polystyrene is included in an amount of 10 parts by weight to 30 parts by weight based on a total of 100 parts by weight of the auxiliary dispersant.

(5) In any one among (1) to (4) above, the present invention provides a carbon nanotube dispersion, wherein the cellulose-based component is included in an amount of 20 parts by weight to 60 parts by weight based on a total of 100 parts by weight of the auxiliary dispersant.

(6) In any one among (1) to (5) above, the present invention provides a carbon nanotube dispersion, wherein the content of the auxiliary dispersant in the dispersion is 5 wt% to 100 wt% based on the content of the main dispersant in the dispersion.

(7) In any one among (1) to (6) above, the present invention provides a carbon nanotube dispersion, wherein the main dispersant is one or more selected from the group consisting of nitrile butadiene rubber (HNBR), styrene butylene rubber, carboxymethyl cellulose, polyvinylpyrrolidone, and polyvinyl butyral.

(8) In any one among (1) to (7) above, the present invention provides a carbon nanotube dispersion, wherein the content of the main dispersant in the dispersion is 0.1 wt% to 10.0 wt% based on the weight of the total dispersion.

(9) In any one among (1) to (8) above, the present invention provides a carbon nanotube dispersion, wherein the solvent is one or more selected from the group consisting of N-methyl-2-pyrrolidone (NMP), methyl ethyl ketone (MEK), acetone, and methyl butyl ketone (MBK).

(10) In any one among (1) to (9) above, the present invention provides a carbon nanotube dispersion, wherein the content of the carbon nanotubes in the dispersion is 3 wt% to 10 wt%.

(11) In any one of (1) to (10) above, the present invention provides a carbon nanotube dispersion, wherein the rate of change in viscosity in one week is 3% or less.

(12) The present invention provides a method for preparing a carbon nanotube dispersion according to any one among (1) to (11), the method including (S1) mixing carbon nanotubes, a solvent, a main dispersant, and an auxiliary dispersant, and (S2) dispersing the above-described mixture.

(13) In (12) above, the present invention provides a method for preparing a carbon nanotube dispersion, wherein the S1 step is performed in a homo-mixer for 0.5 hours to 2 hours.

(14) In (12) or (13) above, the present invention provides a method for preparing a carbon nanotube dispersion, wherein the (S2) step is performed through a dispersion method selected from the group consisting of bead milling, ball milling, and high-pressure homogenization.

### ADVANTAGEOUS EFFECTS

A carbon nanotube dispersion of the present invention has the content of carbon nanotubes in the dispersion at a predetermined level or higher, and thus, is capable of implementing excellent electrical conductivity, and also has a suitable level of initial viscosity of the dispersion itself, and thus, has excellent processability.

In addition, during high-temperature and low-temperature storage, the carbon nanotube dispersion has a lower rate of change in viscosity over time, and thus, has excellent storage stability.

### MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

### Carbon nanotube dispersion

The present invention provides a carbon nanotube dispersion including carbon nanotubes, a solvent, a main dispersant, and an auxiliary dispersant, wherein the auxiliary dispersant contains polyethylene glycol, polystyrene, and a cellulose-based component.

As mentioned earlier, when a polymer-based dispersant such as hydrogenated nitrile butadiene rubber (HNBR), which is known as a dispersant for a typical carbon nanotube dispersion, is applied as a single dispersant, there is an effect of lowering the initial viscosity, but there is a problem in that the viscosity significantly increases over time after a dispersion is prepared, and accordingly, the inventors of the present invention have attempted to lower the rate of change in viscosity over time by applying an auxiliary dispersant together with the polymer-based dispersant.

Particularly, it has been confirmed that in the present invention, an auxiliary dispersant including at least three components of polyethylene glycol, polystyrene, and a cellulose-based component is applied together with a main dispersant, so that it is possible to lower the rate of change in viscosity over time while suppressing the increase in initial viscosity, as well as to maintain the content of carbon nanotubes of a dispersion at a predetermined level or higher.

### Auxiliary dispersant

The auxiliary dispersant used in the present invention auxiliary is characterized by containing polyethylene glycol, polystyrene, and a cellulose-based component.

### 1) Polyethylene glycol

Polyethylene glycol is a polymer formed by dehydration condensation of a plurality of ethylene glycol molecules, and has hydrophilic properties, so that when applied to the carbon nanotube dispersion of the present invention, the polyethylene glycol may serve to maintain a uniform phase with a solvent.

The polyethylene glycol used in the present invention may have a weight average molecular weight (Mw) of 100 g/mol to 5,000 g/mol, preferably 300 g/mol to 2,000 g/mol. If the weight average molecular weight of polyethylene glycol is in the range described above, there may be a technical advantage in that the viscosity of the dispersion may be reduced by suppressing the phase separation between carbon nanotubes and the solvent.

The polyethylene glycol may be included in an amount of 10 parts by weight to 30 parts by weight based on a total of 100 parts by weight of the auxiliary dispersant, preferably 15 parts by weight to 25 parts by weight. If the content of polyethylene glycol in the auxiliary dispersant is less than the range described above, the effect implemented by the polyethylene glycol may not be sufficient, and if the content of polyethylene glycol is greater than the range described above, the content of other components is relatively decreased, so that the effect of improving the viscosity stability of the dispersion may not be sufficiently implemented.

### 2) Polystyrene

Polystyrene is a polymer formed by polymerization of a plurality of styrene monomolecules, and when applied to the carbon nanotube dispersion of the present invention, the polystyrene may serve to lower the viscosity of the dispersion in particular.

The polystyrene used in the present invention may have a weight average molecular weight (Mw) of 800 g/mol to 50,000 g/mol, preferably 1,000 g/mol to 10,000 g/mol. If the weight average molecular weight of polystyrene is in the range described above, the effect of lowering the viscosity of dispersion of polystyrene may be particularly high.

The polystyrene may be included in an amount of 10 parts by weight to 30 parts by weight based on a total of 100 parts by weight of the auxiliary dispersant, preferably 15 parts by weight to 25 parts by weight. If the content of polystyrene in the auxiliary dispersant is less than the range described above, the effect implemented by the polystyrene may not be sufficient, and if the content of polystyrene is greater than the range described above, the content of other components is relatively decreased, so that the effect of improving the viscosity stability of the dispersion may not be sufficiently implemented.

### 3) Cellulose-based component

In the present invention, in addition to the two components described above, a cellulose-based component is applied as an auxiliary dispersant. The cellulose-based component may be one or more selected from the group consisting of methyl cellulose, (hydroxypropyl)methyl cellulose, ethyl cellulose, and hydroxypropyl cellulose. The cellulose-based component contributes significantly to suppressing an increase in viscosity of the dispersion over time, and may improve viscosity stability without loss of initial viscosity.

The cellulose-based component may be included in an amount of 40 parts by weight to 80 parts by weight based on a total of 100 parts by weight of the auxiliary dispersant, preferably 50 parts by weight to 70 parts by weight. If the content of the cellulose-based component in the auxiliary dispersant is less than the range described above, the effect implemented by the cellulose-based component may not be sufficient, and if the content of the cellulose-based component is greater than the range described above, the content of other components is relatively decreased, so that the initial viscosity may excessively increase.

The content of the auxiliary dispersant containing the three components described above in the dispersion may be 10 wt% to 100 wt% based on the content of the main dispersant in the dispersion, preferably 20 wt% to 50 wt%. If the content of the auxiliary dispersant is too low, the effect of improving the viscosity stability of the auxiliary dispersant may be insignificant, and if the content of the auxiliary dispersant is too high, the initial viscosity may become too high due to the presence of the auxiliary dispersant.

### Main dispersant

The auxiliary dispersant described above is for solving the problem of increasing the viscosity of the main dispersant to be described below, and in the present invention, the following main dispersant is used together with the auxiliary dispersant described above to achieve sufficient dispersibility of the dispersion.

Specifically, the main dispersant may be one or more selected from the group consisting of hydrogenated nitrile butadiene rubber (HNBR), styrene butylene rubber, carboxymethyl cellulose, polyvinylpyrrolidone, and polyvinyl butyral.

In the carbon nanotube dispersion of the present invention, the content of the main dispersant in the dispersion may be 5 wt% to 100 wt% based on the content of carbon nanotubes, preferably 10 wt% to 50 wt%. In addition, the content of the main dispersant may be 0.1 wt% to 10.0 wt% based on the weight of the total dispersion, preferably 0.5 wt% to 5 wt%, and particularly preferably 0.5 wt% to 3.0 wt%. If the content of the main dispersant is too low, the carbon nanotubes may not be sufficiently dispersed, and if the content of the main dispersant is too high, the initial viscosity excessively increases, so that it is not possible to increase the content of the carbon nanotubes in the dispersion to higher than a predetermined degree.

### Solvent

The solvent is a medium for dispersing carbon nanotubes, and may be an aqueous or oil-based solvent, and more specifically, may be one or more selected from water, methanol, ethanol, propanol, acetone, dimethyl formamide (DMF), dimethyl acetamide, dimethyl sulfoxide (DMSO), and N-methyl-2-pyrrolidone (NMP).

### Carbon nanotubes

Carbon nanotubes function as a conductive material in the dispersion of the present invention, and may be single-walled carbon nanotubes or multi-walled carbon nanotubes.

The carbon nanotubes used in the present invention are not particularly limited, but may preferably have a bulk density of 20 kg/m³ to 40 kg/m³, and may have a specific surface area of 100 m²/g to 400 m²/g. If the carbon nanotubes satisfy the conditions described above, the electrical conductivity thereof may be particularly excellent. Meanwhile, the bulk density may be calculated by filling a container having a specific volume with carbon nanotubes, and then dividing the measured mass by the volume of the container. In addition, the specific surface area may be measured by the BET method, and more specifically, may be calculated from the amount of nitrogen gas adsorption under liquid nitrogen temperature (77 K) by using a specific surface area measuring device (BEL Japan Co., BELSORP-mini II) .

In the carbon nanotube dispersion of the present invention, the content of the carbon nanotubes may be 3 wt% to 10 wt%, preferably 3 wt% to 6 wt%. The present invention is characterized in that a main dispersant and an auxiliary dispersant are applied together, thereby allowing the content of carbon nanotubes in the dispersants to be 3 wt% or greater. Meanwhile, if the content of the carbon nanotubes is too low, it is not possible to implement sufficient conductivity when the carbon nanotubes are used as a conductive material or the like, and if the content of the carbon nanotubes is too high, the viscosity of the dispersion excessively increases, so that the processability may decrease.

In the carbon nanotube dispersion of the present invention, the rate of change in viscosity in one week may be 3% or less, preferably 2% or less. The rate of change in viscosity in one week is calculated by how much the viscosity has increased during the course of one week when the dispersion is stored for one week under the condition of 25 °C, and may be calculated through Equation 1 below. Rate of change in viscosity (%) = (Viscosity after one-week storage at 25 °C - Viscosity at the time of preparation of dispersion) / (Viscosity at time of preparation of dispersion) * 100%

Meanwhile, the viscosity above may be measured by using a viscometer (TOKI Co., TV-25) and by starting the measurement at 1 rpm with the No. 1 rotor and recording the value after 10 minutes.

The carbon nanotube dispersion of the present invention may decrease the rate of change in viscosity as described above by applying an auxiliary dispersant, and may implement excellent viscosity stability. Meanwhile, if an auxiliary dispersant is not applied, the rate of change in viscosity may be as high as 10% or greater.

### Method for preparing carbon nanotube dispersion

The present invention provides a method for preparing the carbon nanotube dispersion described above, and specifically provides a method for preparing a carbon nanotube dispersion, the method including (S1) mixing carbon nanotubes, a solvent, a main dispersant, and an auxiliary dispersant, and (S2) dispersing the above-described mixture.

In the method for preparing a carbon nanotube dispersion of the present invention, the carbon nanotubes, the solvent, the main dispersant, and the auxiliary dispersant are the same as described above.

Meanwhile, the S1 step of mixing all of the above-described components may be performed in a homo-mixer for 0.5 hours to 2 hours, preferably 0.5 hours to 1.5 hours. If a homo-mixer is used in the mixing process, it is possible to allow the components to be mixed more uniformly, and particularly, if the mixing is performed for the period of time described above, it is possible to form a mixture without deterioration in quality of the carbon nanotubes.

In addition, in the step S2, the formed mixture may be dispersed to prepare a final dispersion. In the dispersion step, the physical properties of the carbon nanotubes in the dispersion may become uniform. Meanwhile, the method for the dispersion may be selected from the group consisting of bead milling, ball milling, and high-pressure homogenization, and preferably, may be bead milling. If the dispersion method described above is used, it is possible to achieve more uniform dispersion, so that it is possible to maintain the viscosity of an obtained carbon nanotube dispersion lower.

The carbon nanotube dispersion prepared by the preparation method of the present invention may have an initial viscosity of 15000 cps or lower, preferably 14000 cps or lower.

Hereinafter, the present invention will be described in more detail with reference to embodiments and experimental embodiments. However, the present invention is not limited by these embodiments and experimental embodiments. The embodiments according to the present invention may be modified into other various forms, and the scope of the present invention should not be construed as being limited to the embodiments described below. The embodiments of the present invention are provided to describe the present invention more fully to those skilled in the art.

### Materials

Carbon nanotubes having a bulk density of 36 kg/m³ and a specific surface area of 186 m²/g were prepared. In addition, hydrogenated nitrile butadiene rubber (HNBR) was prepared as the main dispersant, and N-methyl-2-pyrrolidone (NMP) was prepared as the solvent.

As the auxiliary dispersant of Examples, an auxiliary dispersant A in which polyethylene glycol (weight average molecular weight: 750 g/mol), polystyrene (weight average molecular weight: 2,500 g/mol), and methyl cellulose were mixed at a weight ratio of 1:1:3, and an auxiliary dispersant B in which polyethylene glycol (weight average molecular weight: 750 g/mol), polystyrene (weight average molecular weight: 2,500 g/mol), and (hydroxypropyl)methylcellulose were mixed at a weight ratio of 1:1:3 were used.

As the auxiliary dispersant of Comparative Examples, an auxiliary dispersant C which does not contain a cellulose-based component and in which polyethylene glycol (weight average molecular weight: 750 g/mol), polystyrene (weight average molecular weight: 2,500 g/mol), and ethylene glycol were mixed at a weight ratio of 1:1:1, an auxiliary dispersant D in which polystyrene (weight average molecular weight: 2,500 g/mol) and ethylene glycol were mixed at a weight ratio of 1:1, an auxiliary dispersant E in which the polyethylene glycol and methyl cellulose were mixed at a weight ratio of 1:3, and an auxiliary dispersant F in which the polystyrene and methyl cellulose were mixed at a weight ratio of 1:3 were used.

Meanwhile, the auxiliary dispersants were prepared by pre-dissolving the components used in each of the auxiliary dispersants in the NMP solvent, and then mixing the same in a paste mixer at 1300 rpm for 10 minutes.

### Examples and Comparative Examples

The carbon nanotubes, the solvent, the main dispersant, and the auxiliary dispersant of the above-described materials were mixed in a homo-mixer for 1 hour. Thereafter, a dispersion was prepared by milling for 30 minutes at 3000 rpm using a bead mill. The concentration of the carbon nanotubes used in each of Examples and Comparative Examples and the type and content(based on the total weight of the dispersion) of the main dispersant and the auxiliary dispersant used are summarized in Table 1 below.

**[Table 1]**

| | Examp le 1 | Examp le 2 | Examp le 3 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 |
|---|---|---|---|---|---|---|---|---|---|
| Content of carbon nanotub es in dispers ion (wt%) | 5.5 | 4 | 5.5 | 5.5 | 4 | 5.5 | 5.5 | 5.5 | 5.5 |
| Main dispers ant | HNBR (Mole cular weigh t 70,00 0) | HNBR (Mole cular weigh t 200,0 00) | HNBR (Mole cular weigh t 70,00 0) | HNBR (Mole cular weigh t 70,00 0) | HNBR (Mole cular weigh t 200,0 00) | HNBR (Mole cular weigh t 70,00 0) | HNBR (Mole cular weigh t 70,00 0) | HNBR (Mole cular weigh t 70,00 0) | HNBR (Mole cular weigh t 70,00 0) |
| Content of main dispers ant (wt%) | 1.2 | 0.6 | 1.2 | 1.2 | 0.6 | 1.2 | 1.2 | 1.2 | 1.2 |
| Auxilia ry dispers ant | B | B | A | C | C | D | None | E | F |
| Content of auxilia ry dispers ant (wt%) | 0.4 | 0.2 | 0.4 | 0.4 | 0.2 | 0.4 | 0 | 0.4 | 0.4 |

### Experimental Example 1. Confirmation of viscosity stability of dispersion during room-temperature storage

The initial viscosity of the carbon nanotube dispersion prepared in each of Examples and Comparative Examples was measured, and the viscosity thereof was measured again after one-week storage at 25°C. The rate of change in viscosity was calculated from the measured viscosity, and are summarized in Table 2 below.

**[Table 2]**

| | Examp le 1 | Examp le 2 | Examp le 3 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 |
|---|---|---|---|---|---|---|---|---|---|
| Initia l viscos ity (cps) | 13500 | 4600 | 10000 | 8600 | 3200 | 2200 | 13300 | 18300 | 2500 |
| Viscos ity after 1-week storag e (cps) | 13700 | 4700 | 10180 | 10000 | 4100 | 2300 | 15200 | 18600 | 2500 |
| Viscos ity change rate (%) | 1.5 | 2.2 | 1.8 | 16.3 | 28.1 | 4.5 | 14.3 | 2 | 0 |
| Appear ance of disper sion after 1 week | Good | Good | Good | Good | Good | Defec tive (phas e separ ation ) | Good | Good | Defec tive (phas e separ ation ) |

As can be confirmed in Table 2 above, when comparing Examples 1 and 3 with Comparative Examples 1, 3 and 4 to which the same main dispersant and carbon nanotube contents were applied, it can be seen that Examples 1 and 3 to which the auxiliary dispersant component of the present invention was applied together show a lower rate of change in viscosity. Particularly, Comparative Example 1 to which the auxiliary dispersant C not containing a cellulose-based component was applied shows a slightly lower value in terms of initial viscosity than Examples of the present invention, but in terms of viscosity stability, has a rate of change in viscosity of 16% or higher, thereby indicating that the viscosity stability was greatly reduced during the room-temperature storage. In addition, Comparative Example 3 in which the auxiliary dispersant D not containing either a cellulose-based component or polyethylene glycol was used as the auxiliary dispersant has a low initial viscosity, and a lower rate of change in viscosity itself than other Comparative Examples, but when the appearance of the dispersion was observed after one-week storage, while other Examples and Comparative Examples all showed good results, Comparative Example 3 showed phase separation from the solvent. That is, the structure in which the carbon nanotubes were dispersed in the dispersion was collapsed, and it means that the dispersion of Comparative Example 3 loses its function as a dispersion even when stored for only a short period of time at room temperature after prepared. Comparative Example 4 to which an auxiliary dispersant was not applied also has a high rate of change in viscosity, and thus, has been confirmed to have reduced viscosity stability. In addition, Comparative Examples 5 and 6 in which only some of the auxiliary dispersant components of the present invention were used had problems such as excessively high initial viscosity (Comparative Example 5) or phase separation from the solvent despite a low initial viscosity and a low rate of change in viscosity (Comparative Example 6).

In addition, similar contents to those in the above description were confirmed from the results of comparing Example 2 and Comparative Example 2 to which the main dispersant having a high molecular weight was applied. Comparative Example 2 showed a significantly higher rate of change in viscosity than Example 2, from which it has been confirmed that viscosity stability may vary depending on the component of an applied auxiliary dispersant, regardless of the type of a main dispersant and the content of carbon nanotubes.

### Experimental Example 2. Confirmation of viscosity stability of dispersion during high-temperature storage

For the dispersion of each of Example 1 and Comparative Example 1, the viscosity stability during high-temperature storage was additionally confirmed. While the dispersion was stored under the condition of 60 °C, the viscosity thereof was measured after being stored for 3 days, instead of 7 days, in consideration of the fact that the viscosity increases more sharply under high temperature conditions. The measured initial viscosity, the viscosity after the 3-day storage, and the rate of change in viscosity were calculated and shown in Table 3 below.

**[Table 3]**

| | Example 1 | Comparative Example 1 |
|---|---|---|
| Initial viscosity (cps) | 13500 | 9500 |
| Viscosity after 3-day storage (cps) | 17000 | 13000 |
| Viscosity change rate (%) | 25.9% | 36.8% |

As can be confirmed from the results of Table 3 above, when stored at a high temperature, Example 1 and Comparative Example 1 both had sharply increased viscosity, but it has been confirmed that the rate of change in viscosity of Comparative Example 1 was higher.

From the results, it has been confirmed that the auxiliary dispersant of the present invention has the effect of suppressing a change in viscosity not only during room-temperature storage, but also during high-temperature storage.

## Claims

1. A carbon nanotube dispersion comprising:
carbon nanotubes;
a solvent;
a main dispersant; and
an auxiliary dispersant, wherein the auxiliary dispersant contains polyethylene glycol, polystyrene, and a cellulose-based component.

2. The carbon nanotube dispersion of claim 1, wherein the cellulose-based component is one or more selected from the group consisting of methyl cellulose, (hydroxypropyl)methyl cellulose, ethyl cellulose, and hydroxypropyl cellulose.

3. The carbon nanotube dispersion of claim 1, wherein the polyethylene glycol is included in an amount of 10 parts by weight to 30 parts by weight based on a total of 100 parts by weight of the auxiliary dispersant.

4. The carbon nanotube dispersion of claim 1, wherein the polystyrene is included in an amount of 10 parts by weight to 30 parts by weight based on a total of 100 parts by weight of the auxiliary dispersant.

5. The carbon nanotube dispersion of claim 1, wherein the cellulose-based component is included in an amount of 40 parts by weight to 80 parts by weight based on a total of 100 parts by weight of the auxiliary dispersant.

6. The carbon nanotube dispersion of claim 1, wherein the content of the auxiliary dispersant in the dispersion is 5 wt% to 100 wt% based on the content of the main dispersant in the dispersion.

7. The carbon nanotube dispersion of claim 1, wherein the main dispersant is one or more selected from the group consisting of nitrile butadiene rubber (HNBR), styrene butylene rubber, carboxymethyl cellulose, polyvinylpyrrolidone, and polyvinyl butyral.

8. The carbon nanotube dispersion of claim 1, wherein the content of the main dispersant in the dispersion is **0.1** wt% to 10.0 wt% based on the weight of the total dispersion.

9. The carbon nanotube dispersion of claim 1, wherein the solvent is one or more selected from the group consisting of N-methyl-2-pyrrolidone (NMP), methyl ethyl ketone (MEK), acetone, and methyl butyl ketone (MBK).

10. The carbon nanotube dispersion of claim 1, wherein the content of the carbon nanotubes in the dispersion is 3 wt% to 10 wt%.

11. The carbon nanotube dispersion of claim 1, wherein the rate of change in viscosity in one week is 3% or less.

12. A method for preparing the carbon nanotube dispersion of claim 1, the method comprising:
(S1) mixing carbon nanotubes, a solvent, a main dispersant, and an auxiliary dispersant; and
(S2) dispersing the above-described mixture.

13. The method of claim 12, wherein the S1 step is performed in a homo-mixer for 0.5 hours to 2 hours.

14. The method of claim 12, wherein the S2 step is performed through a dispersion method selected from the group consisting of bead milling, ball milling, and high-pressure homogenization.
